# EUROPEAN PATENT SPECIFICATION

(11) **EP 3 646 740 B1**
(45) Date of publication and mention of the grant of the patent: **22.05.2024**
(21) Application number: 17929422.8
(22) Date of filing: 16.10.2017
(51) Int. Cl.: A24D 3/02, A24C 5/34, G01N 21/892, G01N 21/952

(54) **INSPECTION DEVICE FOR ROD-SHAPED SMOKING ARTICLE, PRODUCTION MACHINE FOR ROD-SHAPED SMOKING ARTICLE, AND INSPECTION METHOD FOR ROD-SHAPED SMOKING ARTICLE**
INSPEKTIONSVORRICHTUNG FÜR STABFÖRMIGEN RAUCHARTIKEL, PRODUKTIONSMASCHINE FÜR STABFÖRMIGEN RAUCHARTIKEL UND INSPEKTIONSVERFAHREN FÜR STABFÖRMIGEN RAUCHARTIKEL
DISPOSITIF D'INSPECTION DESTINÉ À UN ARTICLE À FUMER EN FORME DE TIGE, MACHINE DE PRODUCTION DESTINÉE À UN ARTICLE À FUMER EN FORME DE TIGE, ET PROCÉDÉ D'INSPECTION DESTINÉ À UN ARTICLE À FUMER EN FORME DE TIGE

(43) Date of publication of application: 06.05.2020
(73) Proprietor: Japan Tobacco Inc., Tokyo 105-6927 (JP)
(72) Inventor: ONISHI, Hiroyuki, Tokyo 130-8603 (JP); OKUNAGA, Satoshi, Tokyo 130-8603 (JP); ARAE, Kazumasa, Tokyo 130-8603 (JP)
(74) Representative: Hoffmann Eitle
(86) International application number: PCT/JP2017/037426
(87) International publication number: WO 2019/077665

(56) References cited:
- EP-A1- 1 236 990
- WO-A1-2012/080686
- JP-A- H08 285 546
- JP-A- 2005 037 398
- JP-A- 2006 133 052
- JP-A- 2006 211 951
- US-A1- 2005 029 469
- US-A1- 2016 205 995

## Description

### Technical Field

The present invention relates to an inspection device for a rod-shaped smoking article, a production machine for the rod-shaped smoking article, and an inspection method for the rod-shaped smoking article.

### Background Art

In recent years, a filter used in a smoking article such as a cigarette is diversified. For example, a filter that is divided into a plurality of segments and includes a charcoal, a capsule, a center hole, and a sweetener in the respective segments has been well-known. A length of each of the segments is variously set to 5 mm to 50 mm. Such a filter including the plurality of segments is generally formed from a filter rod including cutout segments that have been aligned, arranged with predetermined intervals, and integrated by a combiner.

In the formed filter rod, erroneous arrangement of the segments may occur, or a defect may occur on each of the segments as the segment structure becomes more complicated. Accordingly, it is necessary to inspect quality of the segment arrangement in the filter rod and quality of the segments themselves. As a device used for the inspection, a filter inspection device using a plurality of wavelengths has been well-known.

Patent Document 1 discloses an inspection device that inspects segment arrangement of a multi-segment filter, and the like. The inspection device determines quality of the segment arrangement from reflection characteristics of a laser beam, and the like.

Patent Document 2 discloses an inspection device that causes an infrared ray to pass through a filter and determines quality of a capsule from difference of transmission characteristics of the filter. In the inspection device, the infrared ray of a long wavelength range is dispersed after the infrared ray passes through an inspection target, and a plurality of light reception units individually receive the dispersed infrared rays to determine the quality of the capsule.

US2005029469A1 discloses a method and apparatus for detecting foreign bodies within a continuously guided product stream. The method includes forming a fan-shaped light beam from collimated irradiation light, irradiating the product stream across its width with the fan-shaped light beam, and detecting at least a portion of detection light emanating from the product stream. The irradiating and detecting take place at least partially along a same optical beam path.

EP1236990A1 discloses that, in an optical density checking apparatus, a 0.7- mu m first light beam (B1) not transmitted through shredded leaf tobacco (LS) and a 1.3-mu m second light beam (B2) transmitted through the shredded leaf tobacco (LS), which are from first and second light sources (12, 14), are synthesized, and an obtained synthetic light beam (B12) is applied to a tobacco rod (TR). The projected light quantities, reflected light quantities, and passing light quantities of the first and second light beams (B1, B2) are measured by a composite light-receiving element (27, 43, 57), projected light quantity control circuit (36), and arithmetic circuit (48). The arithmetic circuit (48) calculates the transmitted light quantity of the second light beam (B2) transmitted through the shredded leaf tobacco (LS) on the basis of the projected light quantities, reflected light quantities, and passing light quantities of the first and second light beams (B1, B2), and calculates the density of the shredded leaf tobacco (LS) on the basis of the transmitted light quantity.

### Prior Art Document

### Patent Document

Patent Document 1: Japanese Patent Laid-Open No. 2007-89583
Patent Document 2: Japanese Patent Laid-Open No. 2014-178117

### Summary of the Invention

### Problems to be solved by the Invention

Most of the existing inspection devices as disclosed in Patent Documents 1 and 2 each inspects the segment arrangement in the filter rod, and presence/absence and quality of an object such as a capsule and a charcoal in each of the segments based on combination of a plurality of wavelengths in the long wavelength range and difference of optical characteristics of the inspection target to each of the wavelengths. Further, some of the existing inspection devices disperse a measurement beam that has applied to the inspection target and has transmitted through or reflected by the inspection target, by a spectroscope or the like, makes the light beams into signals by different detectors, and analyzes the signals obtained for respective wavelengths, thereby determining quality of the inspection target. Such a configuration requiring the spectroscopy complicates the inspection device, which inevitably leads to an expensive device configuration.

In particular, in recent years, the capsule is diversified, and colors of the capsules are changed for respective brands of cigarettes in terms of traceability. Therefore, not only content liquid used in the capsules but also coloring matters thereof are diversified, and the optical characteristics of the capsules are varied for each of the capsules. Thus, threshold setting of the optical characteristics used in the inspection is different depending on the type of the capsule, and complicated threshold setting is necessary depending on the capsule. Furthermore, an appropriate inspection may not be performed depending on the type of the capsule.

Accordingly, it is desirable to provide an inspection device that can perform excellent inspection without requiring the complicated threshold setting and the complicated device configuration for spectroscopy and the like irrespective of the type, in particular, the color of inspection targets when a cigarette and a rod-shaped smoking article including a tobacco rod are widely handled as inspection targets in addition to a filter of the cigarette and the filter rod obtained in the manufacturing process thereof.

The present invention is made in consideration of such issues, and an object of the present invention is to provide an inspection device for a rod-shaped smoking article, a production machine for the rod-shaped smoking article, and an inspection method for the rod-shaped smoking article that each can perform excellent inspection without requiring the complicated threshold setting and the complicated device configuration for spectroscopy and the like irrespective of the type, in particular, the color of inspection target.

### Means for Solving the Problems

The object of the present disclosure is achieved by the subject matter of the appended independent claims. The dependent claims define advantageous embodiments. Examples are provided to facilitate the understanding of the present disclosure. An example is directed to an inspection device for a rod-shaped smoking article, including: a plurality of light sources configured to generate light beams with different wavelength distributions; an adjuster configured to form an inspection beam from the light beams generated by the respective light sources; an irradiation unit configured to irradiate the rod-shaped smoking article with the inspection beam formed by the adjuster; a light receiver configured to receive a measurement beam that is obtained when the inspection beam applied from the irradiation unit acts on the rod-shaped smoking article; and a determination unit configured to determine quality of the rod-shaped smoking article based on the measurement beam received by the light receiver. The adjuster adjusts a color of the inspection beam by mixing the light beams generated by the respective light sources.

An example is directed to a production machine for a rod-shaped smoking article including the above-described inspection device, and the production machine includes a conveyance drum configured to convey the rod-shaped smoking article. The conveyance drum includes a cylindrical core that internally includes a suction source and the irradiation unit, and a drum shell that covers the cylindrical core and is disposed to be rotatable with respect to the cylindrical core. The cylindrical core includes a communication port that makes the suction source and the drum shell communicate with each other in a circumferential direction, and a first irradiation port at which the irradiation unit is positioned. The drum shell includes a plurality of holding grooves that are arranged with intervals in the circumferential direction and are each configured to hold the rod-shaped smoking article, a suction hole that is opened on a bottom wall of each of the holding grooves and communicates with the communication port along with rotation of the drum shell, and a second irradiation port that is opened on the bottom wall of each of the holding grooves. When the second irradiation port is positioned to be overlapped with the first irradiation port along with the rotation of the drum shell, the irradiation unit irradiates the rod-shaped smoking article held by the corresponding holding groove with the inspection beam.

An exampleis directed to an inspection method for a rod-shaped smoking article, including: a light generation step of generating a plurality of light beams with different wavelength distributions; an adjustment step of forming an inspection beam from the plurality of light beams; an irradiation step of irradiating the rod-shaped smoking article with the inspection beam; a light reception step of receiving a measurement beam obtained when the applied inspection beam acts on the rod-shaped article; and a determination step of determining quality of the rod-shaped article based on the measurement beam. The adjustment step includes a color adjustment process of adjusting a color of the inspection beam by mixing the light beams generated in the light generation step.

### Advantageous Effects of the Invention

According to the inspection device for the rod-shaped smoking article, the production machine for the rod-shaped smoking article, and the inspection method for the rod-shaped smoking article of the present invention, it is possible to perform excellent inspection of the rod-shaped smoking article without requiring the complicated threshold setting and the complicated device configuration for spectroscopy and the like irrespective of the type, in particular, the color of the inspection target.

### Brief Description of the Drawings

FIG. 1 is a block diagram illustrating an outline of a production machine for a multi-segment filter rod including an inspection device according to an embodiment of the present invention.
FIG. 2 is a diagram illustrating an outline of a production process of a filter and a filter cigarette performed by a filter attachment in FIG. 1.
FIG. 3 is a schematic diagram illustrating an example of a conveyance drum line of a conveyance section in FIG. 1.
FIG. 4 is a configuration diagram of an inspection device provided on a conveyance drum in FIG. 3.
FIG. 5 is a diagram illustrating a part of the conveyance drum in FIG. 4 as viewed from a detector side.
FIG. 6 is a configuration diagram of an adjuster in FIG. 4.
FIG. 7 is a diagram illustrating an irradiation unit in FIG. 6 as viewed from the detector side.
FIG. 8 is a diagram illustrating a case where dimming plates are used in the adjuster in FIG. 6.
FIG. 9 is an image when the inspection device according to the present embodiment inspects a filter rod MF with an inspection beam of a color similar to a color of a material rod R1.
FIG. 10 is an image when the inspection device according to the present embodiment inspects the filter rod MF with an inspection beam of a color similar to a color of a capsule C.
FIG. 11 is a configuration diagram of an inspection device according to a modification of the present invention.
FIG. 12 is a flowchart to explain a procedure of an inspection method according to the present invention.

### Mode for Carrying out the Invention

An inspection device for a rod-shaped smoking article according to an embodiment of the present invention is described below with reference to drawings.

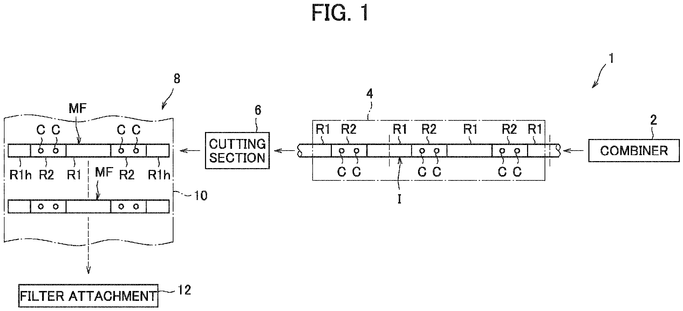

FIG. 1 is a block diagram illustrating an outline of a production machine for a multi-segment filter rod for a cigarette that is an example of the rod-shaped smoking article. A production machine 1 includes a combiner 2 on an upstream side. The combiner 2 aligns material rods (segments) cut out from a plurality of types of filter materials, in one line based on a predetermined arrangement, to form a large number of continuous bodies arranged with predetermined intervals, and sequentially supplies these continuous bodies to a winding section 4 on a subsequent stage.

The continuous bodies according to the present embodiment include two material rods (segments) R1 and R2 that are alternately arranged, and two capsules C are separately embedded in each of the material rods R2. As the material rods R1 and R2, a plane material rod, a charcoal material rod, a hydrotalcite material rod, or the like is used. The plane material rod is formed by wrapping filter fiber bundle of cellulose diacetate with wrapping paper.

Further, the charcoal material rod is obtained by adding activated charcoal particles to the plane material rod. The hydrotalcite material rod is obtained by adding hydrotalcite compound particles to the plane material rod. Each of the capsules C is a destroyable shell filled with content liquid. The content liquid includes, for example, a flavoring ingredient and edible oil (e.g., fatty acid triglyceride) as a solvent in which the flavoring ingredient is dissolved. Note that the wrapping paper used for the material rods R1 and R2 may be made different in opacity (optical transparency) by changing, for example, an addition amount of a filler (e.g., calcium carbonate).

The winding section 4 includes a configuration similar to a configuration of a winding section of a cigarette production machine. The winding section 4 continuously wraps the above-described supplied continuous bodies by a forming paper in a process in which the above-described supplied continuous bodies are traveled by a garniture tape together with the forming paper, thereby forming a rod-shaped intermediate product I. The intermediate product I is sent out from the winding section 4 to a cutting section 6 on the subsequent stage. The intermediate product I is cut to individual multi-segment filter rods MF (hereinafter, also simply referred to as filter rods MF) each having a predetermined length when passing through the cutting section 6. The filter rods MF are sent out from the cutting section 6 to an unillustrated kicker.

The cutting section 6 internally includes a rotary knife, and intermittently cuts the material rods R1 arranged in the intermediate product I, every other rod R1, at a center as a cut position (illustrated by dashed line). As a result, half bodies R1h of the material rod R1 are positioned at respective ends of each of the filter rod MF, and the material rod R2, the material rod R1, and the material rod R2 are sequentially positioned between the half bodies R1h. The filter rods MF each formed in the above-described manner are sequentially sent from the kicker to a conveyance section 8.

The conveyance section 8 includes a conveyance drum line 10. The conveyance drum line 10 conveys the filter rods MF in a direction intersecting with a traveling direction of the intermediate product I, and supplies the filter rods MF to an unillustrated belt conveyer disposed on the subsequent stage of the conveyance drum line 10. Thereafter, the filter rods MF on the belt conveyer are supplied to a filter attachment 12 on the subsequent stage.

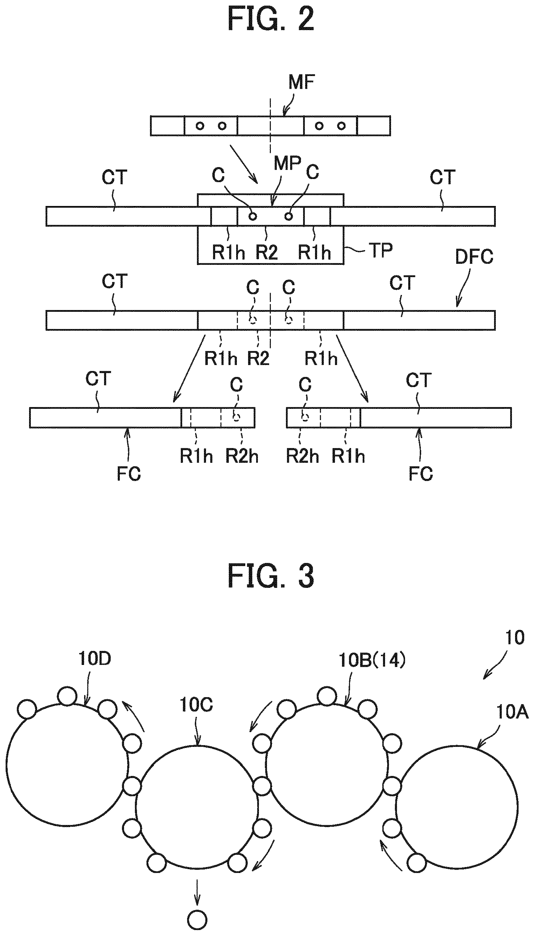

FIG. 2 is a diagram illustrating an outline of a production process of a filter and a filter cigarette performed by the filter attachment 12. The filter attachment 12 cuts one filter rod MF illustrated by a dashed line at the center, to form a filter plug MP. The half bodies R1h are positioned at respective ends of the filter plug MP, and the material rod R2 is positioned between the half bodies R1h. Next, the filter attachment 12 provides cigarettes CT on the respective ends of the individually-formed filter plug MP, and connects them by winding of a tip paper TP, thereby forming a double filter cigarette DFC.

Thereafter, the double filter cigarette DFC is cut at a center of the filter plug MP illustrated by a dashed line, namely, at the center of the material rod R2, to form individual filter cigarette FC. As a result, the filter of the filter cigarette FC is formed as a double filter in which the material half body R1h is adjacent to the material half body R2h of the material rod R2 as a mouthpiece end. One capsule C is embedded in the material half body R2h as the mouthpiece end.

FIG. 3 is a schematic diagram illustrating an example of the conveyance drum line 10 of the conveyance section 8. The conveyance drum line 10 includes, for example, four connected conveyance drums 10A to 10D. The filter rods MF are sequentially conveyed while being transferred to the adjacent conveyance drums 10A to 10D. The conveyance drum 10A that is located at a start end of the conveyance drum line 10 is configured as a catch drum. The catch drum receives the filter rods MF that are intermittently sent out through the kicker, and conveys the received filter rods MF to the next conveyance drum 10B, during rotation.

Thereafter, the filter rods MF are sequentially conveyed from the conveyance drum 10A as the catch drum to the adjacent conveyance drums 10B to 10D while being transferred to the adjacent conveyance drums 10B to 10D. As described above, after the filter rods MF are supplied to the belt conveyer, the filter rods MF are supplied to the filter attachment 12. Further, the conveyance drum 10C in the conveyance drum line 10 is configured as a removal drum. A defective filter rod MF is removed by the removal drum in the conveyance process by the conveyance drum line 10.

In the production machine 1 according to the present embodiment, an inspection device 14 for a rod-shaped smoking article is provided on the conveyance drum line 10 of the conveyance section 8. More specifically, the conveyance drum 10B in the conveyance drum line 10 is also used as a part of the inspection device 14, and the inspection device 14 inspects the filter rods MF.

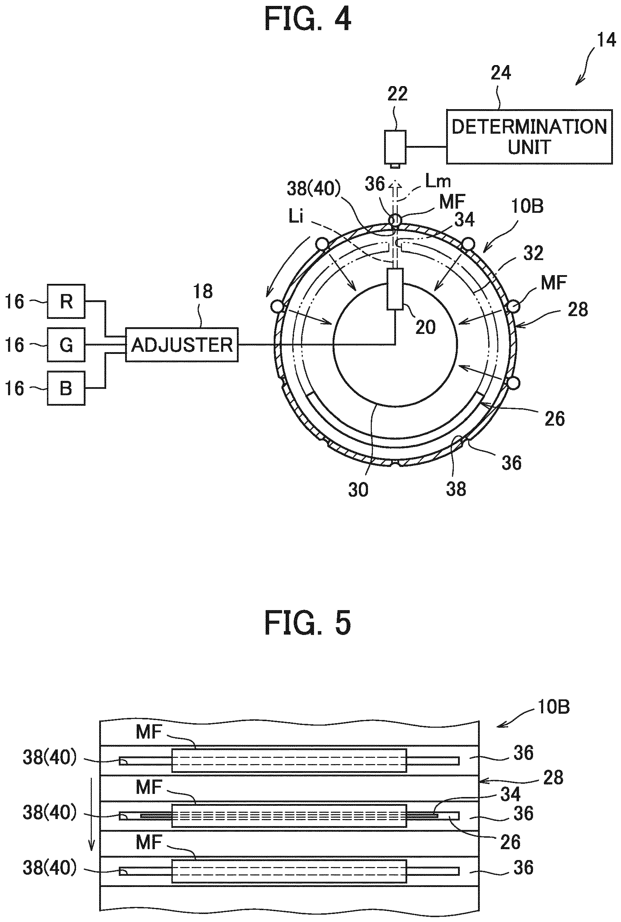

FIG. 4 is a configuration diagram of the inspection device 14 provided on the conveyance drum 10B. The inspection device 14 includes three light sources 16, an adjuster 18, an irradiation unit 20, a detector (light receiver) 22, and a determination unit 24. The light sources 16, the detector 22, and the determination unit 24 are disposed outside the conveyance drum 10B.

The three light sources 16 are devices generating LED (light-emitting diode) light beams of, for example, red R, green G, and blue B. The red R, the green G, and the blue B are three primary colors of light. Wavelength peaks of the LED light beams of the red R, the green G, and the blue B generated from the light sources 16 are 630 nm, 525 nm, and 450 nm, respectively, and the LED light beams of the red R, the green G, and the blue B have different wavelength distributions. Further, each of the light sources 16 is configured so as to independently adjust intensity of the corresponding light beam.

The adjuster 18 forms inspection beam Li from the light beams generated from the light sources 16. The irradiation unit 20 irradiates each filter rod MF with the inspection beam Li formed by the adjuster 18. The detector 22 receives measurement beam Lm that is obtained when the inspection beam Li applied from the irradiation unit 20 acts on the filter rod MF. The detector 22 according to the present embodiment is, for example, a stroboscopic camera that can perform monochromatic imaging, and receives, as the measurement beam Lm, a light beam transmitted through the filter rod MF.

The determination unit 24 determines quality of the filter rod MF based on the measurement beam Lm received by the detector 22. The determination unit 24 is, for example, an image recognition device, and determines the quality of the filter rod MF based on contrast (brightness difference) of a monochrome image captured by the detector 22.

The adjuster 18 according to the present embodiment adjusts a color of the inspection beam Li by mixing the light beams generated from the respective light sources 16. More specifically, the adjuster 18 adjusts the color of the inspection beam Li by causing the respective light sources 16 to adjust the intensity of the light beams generated from the respective light sources 16.

On the other hand, the conveyance drum 10B includes a fixed cylindrical core 26, and a cylindrical drum shell 28 that is disposed so as to be rotatable with respect to the cylindrical core 26 and covers the cylindrical core 26 on the outside of the cylindrical core 26. A suction source 30 and the above-described irradiation unit 20 are disposed inside the cylindrical core 26.

The cylindrical core 26 includes a communication port 32 that makes the suction source 30 and the drum shell 28 communicate with each other in a circumferential direction, and a first irradiation port 34 at which the irradiation unit 20 is positioned. As illustrated by an alternate long and two short dashes line in FIG. 4, the communication port 32 is provided over a predetermined range in the circumferential direction. The drum shell 28 includes a plurality of holding grooves 36 that are arranged with intervals in the circumferential direction, and a suction hole 38 is opened on a bottom wall of each of the holding grooves 36. Each of the holding grooves 36 is positioned in a formation range of the communication port 32 along with rotation of the drum shell 28.

When each of the holding grooves 36 is positioned in the formation range of the communication port 32, the communication port 32 communicates with the suction hole 38. The filter rod MF is sucked to and held by each of the holding grooves 36 by suction of air by the suction source 30 through the suction hole 38, and the filter rod MF is transferred from the conveyance drum 10A to the conveyance drum 10B. In contrast, when each of the holding grooves 36 holding the filter rod MF deviates from the formation range of the communication port 32 along with further rotation of the drum shell 28, the communication port 32 and the suction hole 38 are put into a non-communication state.

When the communication port 32 and the suction hole 38 are in the non-communication state, suction of air by the suction source 30 through the suction hole 38 is not performed. Therefore, holding of the filter rod MF by each of the holding grooves 36 is canceled, and the filter rod MF is transferred from the conveyance drum 10B to the conveyance drum 10C.

In the inspection device 14 provided on the conveyance drum 10B, when the suction hole 38 is positioned so as to be overlapped with the first irradiation port 34 along with rotation of the drum shell 28, the irradiation unit 20 irradiates the filter rod MF held by the corresponding holding groove 36, with the inspection beam L1 at this timing, and the filter rod MF is inspected.

FIG. 5 is a diagram illustrating a part of the conveyance drum 10B as viewed from the detector 22 side. FIG. 5 illustrates a state where the filter rod MF is sucked to and held by each of the holding grooves 36. Each of the holding grooves 36 has a long groove shape extending in a height direction of the cylindrical drum shell 28, and each of the suction holes 38 has a long hole shape extending in the height direction of the drum shell 28 on the bottom wall of each of the holding grooves 36.

In FIG. 5, in the holding groove 36 at the uppermost part, the suction hole 38 of the drum shell 28 is positioned so as to be overlapped with the first irradiation port 34 of the cylindrical core 26, along with rotation of the drum shell 28 in an arrow direction, and the irradiation unit 20 irradiates the filter rod MF held by the holding groove 36 at the upper most part, with the inspection beam Li. Along with further rotation of the drum shell 28, the suction holes 38 of the respective holding grooves 36 are sequentially overlapped with the first irradiation port 34. As a result, the filter rods MF held by the respective holding grooves 36 are sequentially irradiated with the inspection beam Li, and the filter rods MF are sequentially inspected.

As described above, each of the suction holes 38 according to the present embodiment also has a function as a second irradiation port 40 through which the inspection beam Li applied from the first irradiation port 34 passes, and the second irradiation port 40 is formed as a long hole having an opening length that is longer than or equal to a length of the rod-shaped article. Accordingly, the entire length of the filter rod MF can be irradiated with the inspection beam Li.

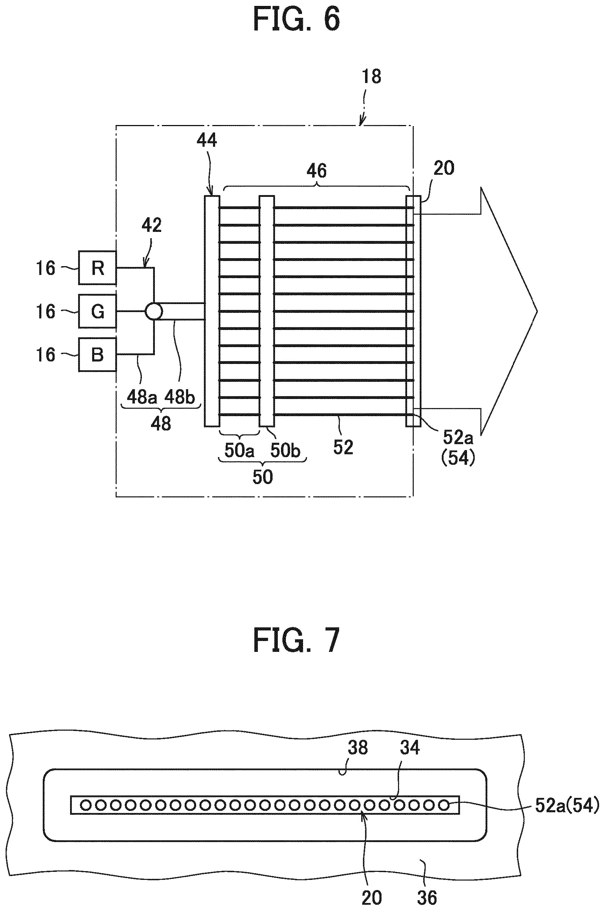

FIG. 6 is a configuration diagram of the adjuster 18. The adjuster 18 includes a coupler unit 42, an alignment unit 44, and a propagation section 46 in order in a beam propagation direction. The coupler unit 42 includes an optical fiber bundle 48, and the fiber bundle 48 includes three branched bundles 48a connected to the respective light sources 16, and one coupled bundle 48b connected to the alignment unit 44. The coupled bundle 48b is disposed so as to uniformize distribution of the optical fibers in each of the branched bundles 48a.

The coupled bundle 48b is branched into a plurality of bundles and connected to the alignment unit 44. The coupled bundle 48b is branched so as to uniformize distribution of the optical fibers in each of the branched bundles 48a. As a result, the light beam coupled by the coupler unit 42 is aligned and branched into the plurality of light beams without color deviation, and the plurality of light beams is propagated to the alignment unit 44. The propagation section 46 propagates the light beams branched by the alignment unit 44 to the irradiation unit 20. More specifically, the propagation section 46 includes a space propagation unit 50, a plurality of irradiation fibers 52, and an irradiation source 54 in order in the beam propagation direction.

The space propagation unit 50 extends between the alignment unit 44 and the irradiation fibers 52 in a direction intersecting with the beam propagation direction. The space propagation unit 50 includes a space 50a and a coupling unit 50b, and propagates light beams by coupling through the space 50a. The light beams applied from the alignment unit 44 to the space 50a are received by the coupling unit 50b once, and are then propagated to the irradiation fibers 52. In other words, the irradiation fibers 52 propagates the light beams branched by the alignment unit 44 to the irradiation unit 20 through the space propagation unit 50.

FIG. 7 is a diagram illustrating the irradiation unit 20 as viewed from the detector 22 side. Terminal ends 52a of the respective irradiation fibers 52 are positioned at the irradiation unit 20, and an assembly of the terminal ends 52a functions as the irradiation source 54 disposed on the irradiation unit 20. More specifically, the respective terminal ends 52a are arranged along a longitudinal direction of the first irradiation port 34, and can be handled as one irradiation source 54 extending in the longitudinal direction. The light beams generated from the respective light sources 16 are applied from the irradiation unit 20 in a state where the light beams are mixed by the adjuster 18 having the above-described configuration, without color deviation.

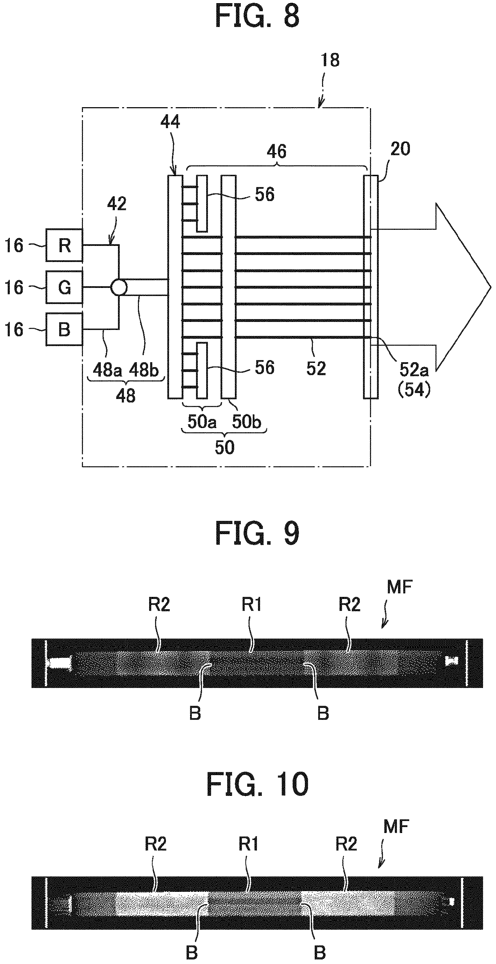

FIG. 8 is a diagram illustrating a case where dimming plates 56 are used in the adjuster 18 illustrated in FIG. 6. The dimming plates 56 are disposed at the respective ends of the space 50a of the space propagation unit 50 so as to be slidable in the direction intersecting with the beam propagation direction. Providing the two dimming plates 56 in the space propagation unit 50 as illustrated in FIG. 8 makes it possible to dim the light beams propagated from the alignment unit 44 to the coupling unit 50b through the space propagation unit 50. As a result, it is possible to adjust the irradiation range of the inspection beam Li applied from the irradiation source 54 based on the length of the filter rod MF.

FIG. 9 is an image when the inspection device 14 inspects the filter rod MF that includes the material rods R1 and R2 wrapped with the wrapping paper different in opacity (optical transparency). The image is obtained by imaging the measurement beam Lm by the detector 22, for example, when a red capsule C is used and the inspection beam Li of blue-green color opposite to the red color passes through the filter rod MF. In the imaging result at this time, the capsule C appears black and has a blurred outline because the capsule C and the inspection beam Li have relationship close to opposite colors.

In other words, in this case, a segment boundary B between the material rod R1 and the material rod R2 is unclear and is difficult to be recognized because of the black appearance of the capsule C as well as difference of the opacity (optical transparency) of the wrapping paper used for the material rods R1 and R2. Further, contrast between the material rod R1 and the capsule C is small, and the outline of the capsule C is blurred and expanded. Accordingly, when the inspection device 14 inspects the segment boundary B, the determination unit 24 may erroneously recognize the segment boundary B as the outline of the capsule C in the image recognition, and may determine a good filter rod MF as a defective filter rod.

On the other hand, FIG. 10 is an image when the inspection device 14 inspects the filter rod MF with the inspection beam Li of a color that is similar to the color of the capsule C. The image is obtained by imaging the measurement beam Lm by the detector 22 when the red capsule C is used as with the case in FIG. 9 but the inspection beam Li of the red color passes through the filter rod MF. In the imaging result at this time, the capsule C appears bright gray because the capsule C and the inspection beam Li have the similar color.

In this case, the capsule C disposed inside the material rod R2 cannot be recognized due to saturation (halation); however, the contrast between the material rod R1 and the capsule C becomes large, and the segment boundary B is clearly recognizable. Accordingly, the determination unit 24 can easily recognize the segment boundary B in the image recognition, and can surely determine quality of the filter rod MF.

As described above, in the inspection device 14 according to the present embodiment, the adjuster 18 adjusts the color of the inspection beam Li by mixing the light beams generated from the respective light sources 16. As a result, it is possible to easily adjust the measurement beam Lm acting on the filter rod MF to a color that facilitates determination of the quality of the filter rod MF, by adjusting the color of the inspection beam Li. More specifically, it is possible to surely recognize the inspection target by adjusting the color of the inspection beam Li based on the inspection target, for example, the position of the segment boundary B, namely, the quality of arrangement of the segments such as the material rods R1 and R2 in the filter rod MF, the quality of each of the segments, and layout and the color of the capsule C.

Further, since the color adjustment of the inspection beam Li can be easily visually performed, it is unnecessary to determine the difference of the optical characteristics of the inspection target with respect to the respective wavelengths of the measurement beam Lm through threshold setting, and it is also unnecessary to analyze signals obtained from the dispersed measurement beams Lm for respective wavelengths. Accordingly, it is possible to perform excellent inspection of the filter rod MF without requiring the complicated threshold setting and a complicated device configuration for spectroscopy and the like, irrespective of the type, in particular, the color of the inspection target.

Further, it is possible to adjust the color of the inspection beam Li, furthermore, the measurement beam Lm only by simple operation to adjust the intensity of the light beams generated from the respective light sources 16.

Further, more specifically, the adjuster 18 includes the coupler unit 42 that couples the light beams generated from the respective light sources 16, the alignment unit 44 that branches the light beam coupled by the coupler unit 42 into the plurality of light beams, and the propagation section 46 that propagates the light beams branched by the alignment unit 44 to the irradiation unit 20.

Further, the propagation section 46 includes the plurality of irradiation fibers 52 that propagate the light beams branched by the alignment unit 44 to the irradiation unit 20, and the irradiation source 54 that includes the terminal ends 52a of the respective irradiation fibers 52 positioned at the irradiation unit 20. Since the adjuster 18 includes such a configuration, it is possible to surely adjust the color of the inspection beam Li, furthermore, the measurement beam Lm.

Moreover, since the dimming plates 56 are provided on the space propagation unit 50 in the propagation section 46, it is possible to irradiate the filter rod MF with the inspection beam Li having the irradiation width matched to the length of the filter rod MF. This makes it possible to suppress saturation (halation) caused when the detector 22 receives the measurement beam Lm from an unnecessary range where the filter rod MF is not present, for example, in inspection of a short filter rod MF. Accordingly, it is possible to further enhance inspection accuracy of the filter rod MF.

Further, when the suction hole 38 is positioned so as to be overlapped with the first irradiation port 34 of the cylindrical core 26 along with rotation of the drum shell 28, the irradiation unit 20 irradiates the filter rod MF held by the holding groove 36 of the drum shell 28, with the inspection beam Li. As a result, the filter rod MF can be inspected with the simpler configuration with use of the conveyance drum 10B provided on the production machine 1 for the filter rod MF.

Further, the suction hole 38 also functions as the second irradiation port 40 through which the inspection beam Li applied from the first irradiation port 34 passes. This makes it possible to inspect the filter rod MF with the simpler configuration without requiring drastic remodeling of the existing conveyance drum 10B.

Moreover, the second irradiation port 40 is provided as a long hole having an opening length longer than or equal to the length of the filter rod MF. Therefore, it is possible to irradiate the entire length of the filter rod MF with the inspection beam Li, which makes it possible to further enhance the inspection accuracy of the filter rod MF.

Since the light sources 16, the detector 22, and the determination unit 24 are provided outside the conveyance drum 10B, the inspection device 14 can be easily installed later on the existing production machine 1 for the filter rod MF. This makes it possible to inspect the filter rod MF with the simpler configuration.

As described with reference to FIG. 9 and FIG. 10, in the case where the filter rod MF as the inspection target is divided into the plurality of segments like the material rods R1 and R2, the inspection beam Li is adjusted to the color that allows for recognition of the boundary B between the segments such as the material rods R1 and R2, in the inspection device 14. This makes it possible to easily and surely determine the arrangement quality of the segments such as the material rods R1 and R2.

Further, in the case where the capsule C is disposed inside the filter rod MF, the inspection device 14 can reduce influence of the capsule C on the measurement beam Lm by adjusting the inspection beam Li to the color similar to the color of the capsule C. Accordingly, it is possible to more clearly recognize the boundary B between the segments such as the material rods R1 and R2, to recognize the type of each of the segments, and to further enhance the inspection accuracy of the filter rod MF.

Although the embodiment of the present invention has been described above, the present invention is not limited to the embodiment, and various modifications can be made without departing from the scope of the present invention.

For example, in the above-described embodiment, the light sources 16 are devices to generate LED light beams of the three primary colors of light. However, the light sources 16 are not limited thereto, and may generate light beams of different wavelength distributions, more specifically, visible light beams of colors other than the three primary colors. Alternatively, two or four or more light sources 16 may be used, or the light sources 16 may be devices each generating, for example, a laser beam other than LED light beam.

Further, as the light beam in the embodiment of the present invention, visible light beam is desirable because of easiness of the color adjustment; however, invisible light beams such as ultraviolet rays and infrared rays may be mixed, or only invisible light beam may be used.

Further, the intensity of the inspection beam Li has been adjusted by each of the light sources 16. Alternatively, the intensity of the inspection beam Li may be adjusted by the adjuster 18. Further, the detector 22 is a stroboscopic camera that can perform monochromatic imaging; however, the detector 22 may be a camera that can perform color imaging or may be a sensor or the like including the other light receiving function.

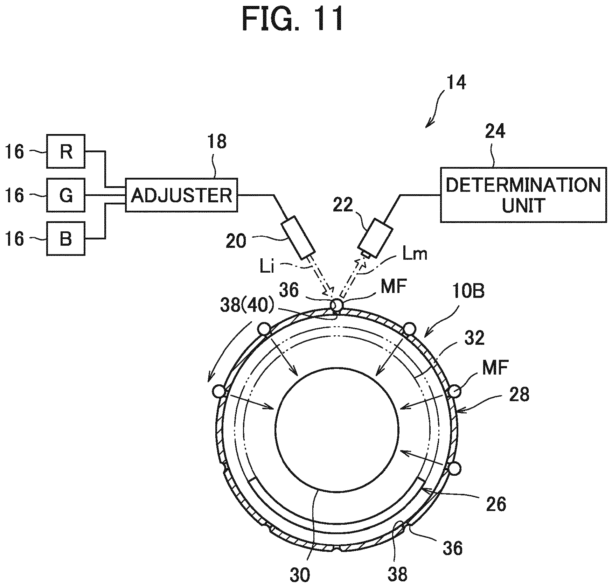

Further, in the above-described embodiment, the detector 22 receives the light beam transmitted through the filter rod MF as the measurement beam Lm; however, the measurement beam is not limited thereto. For example, as illustrated in FIG. 11, reflected light beam reflected by the filter rod MF may be used as the measurement beam Lm as long as the measurement beam Lm is a light beam obtained when the inspection beam Li acts on the filter rod MF.

Further, in the above-described embodiment, the suction hole 38 provided on the drum shell 28 is also used as the second irradiation port 40; however, the second irradiation port 40 is not limited thereto. The second irradiation port 40 may be provided on the bottom wall of each of the holding grooves 36 separately from the suction hole 38. Also in this case, it is possible to achieve the basic performance of the inspection device 14 according to the present embodiment.

Further, in the above-described embodiment, the inspection device 14 inspects the multi-segment filter rod MF for a cigarette. The inspection device 14, however, can recognize not only the position of the boundary B between the segments configuring the filter rod MF but also presence/absence of an object disposed inside the filter rod MF other than the capsule C and the type of the segments themselves. In addition, the multi-segment filter rod MF may include two or more types of, for example, three or four types of material rods or cavities without being limited to the two types of material rods. The inspection device 14 can similarly inspect such a multi-segment filter rod MF. Moreover, the inspection device 14 is widely applicable to inspection of a filter rod other than the multi-segment filter rod, a cigarette, and a rod-shaped smoking article including a tobacco rod.

Further, in the above-described embodiment, the inspection device 14 is provided on the conveyance drum 10B in the conveyance section 8 of the production machine 1 for the filter rod MF. However, the configuration is not limited thereto, and the inspection device 14 may be provided on a conveyance drum configuring the conveyance drum line 10 other than the conveyance drum 10B on the downstream side of the catcher drum.

The inspection device 14 illustrated in FIG. 4 may be provided on a section other than the conveyance section 8 of the production machine 1 or a production machine for a smoking article other than the production machine 1. Further, the inspection device 14 may be provided as the inspection device 14 for the rod-shaped smoking article, independently of the production machine 1.

As described above, the inspection device 14 can be provided on the conveyance drum line 10 of the production machine 1 or can be independently provided as the inspection device 14 separately from the production machine 1. In addition, the present invention is widely applicable to inspection of the rod-shaped smoking article by an inspection method described below irrespective of use/disuse of the conveyance drum.

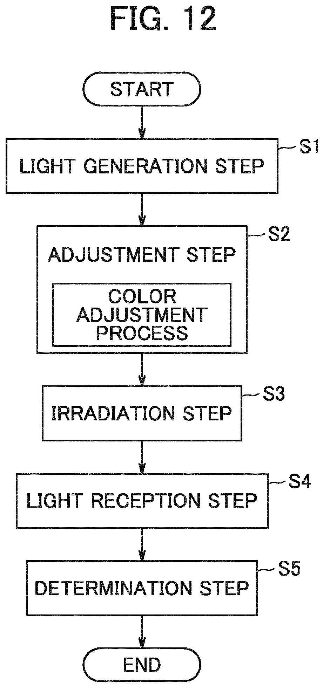

FIG. 12 is a flowchart illustrating a procedure of the inspection method. When the inspection of the rod-shaped smoking article is started, a plurality of light beams with different wavelength distributions, namely, difference in color are first generated in step S1 (light generation step). In subsequent step S2, the inspection beam Li is formed from the plurality of light beams (adjustment step). In the adjustment step, a color adjustment process of adjusting the color of the inspection beam Li by mixing the light beams generated in the light generation step is performed. In subsequent step S3, the rod-shaped article is irradiated with the inspection beam Li (irradiation step).

In subsequent step S4, the measurement beam Lm that is obtained when the irradiated inspection beam Li acts on the rod-shaped article is received (light reception step). In subsequent step S5, quality of the rod-shaped article is determined based on the measurement beam Lm (determination step). The inspection procedure then ends. Note that the rod-shaped article determined as defective in the inspection is appropriately removed. Using such an inspection method can achieve effects similar to the effects achieved when the above-described inspection device 14 is used.

More specifically, in the color adjustment process, the color of the inspection beam Li is adjusted by adjusting intensity of each of the light beams generated in the light generation step. Further, in a case where the rod-shaped article is divided into a plurality of segments, quality of the arrangement of the segments can be easily determined by adjusting the color of the inspection beam Li to the color allowing for recognition of the boundary B between the segments in the color adjustment process.

In a case where an object such as the capsule C is included inside the rod-shaped article, influence of the capsule C on the measurement beam Lm can be reduced by adjusting the color of the inspection beam Li to the color similar to the object in the color adjustment process. This allows for clear recognition of the boundary B between the segments and further allows for recognition of the type of each of the segments. As a result, it is possible to further enhance the inspection accuracy of the rod-shaped article.

### Explanation of Reference Signs

1 Production machine for cigarette multi-segment filter rod (production machine for rod-shaped smoking article)
10B Conveyance drum
14 Inspection device
16 Light source
18 Adjuster
20 Irradiation unit
22 Light receiver
24 Determination unit
26 Cylindrical core
28 Drum shell
30 Suction source
32 Communication port
34 First irradiation port
36 Holding groove
38 Suction hole
40 Second irradiation port
44 Alignment unit
46 Propagation section
42 Coupler unit
50 Space propagation unit
50a Space
52 Irradiation fiber
52a Terminal end
54 Irradiation source
56 Dimming plate
MF Multi-segment filter rod (rod-shaped smoking article)
R1, R2 Material rod (segment)
B Boundary
C Capsule (object)
Li Inspection beam
Lm Measurement beam

## Claims

1. An inspection device (14) for a rod-shaped smoking article (MF), comprising:
a plurality of light sources (16) configured to generate light beams with different wavelength distributions;
an adjuster (18) configured to form an inspection beam from the light beams generated by the respective light sources (16);
an irradiation unit (20) configured to irradiate the rod-shaped smoking article (MF) with the inspection beam formed by the adjuster (18);
a light receiver (22) configured to receive a measurement beam that is obtained when the inspection beam applied from the irradiation unit (20) acts on the rod-shaped smoking article (MF); and
a determination unit (24) configured to determine quality of the rod-shaped smoking article (MF) based on the measurement beam received by the light receiver (22), wherein
the adjuster (18) is configured to adjust a color of the inspection beam by mixing the light beams generated by the respective light sources (16); wherein
the adjuster (18) is configured to adjust the color of the inspection beam by adjusting intensity of each of the light beams generated by the respective light sources; wherein
the adjuster (18) includes a coupler unit (42) configured to couple the light beams generated by the respective light sources (16), an alignment unit (44) configured to branch the light beam coupled by the coupler unit (42) into a plurality of light beams, and a propagation section (46) configured to propagate the light beams branched by the alignment unit (44) to the irradiation unit (20).

2. The inspection device (14) for the rod-shaped smoking article (MF) according to claim 1, wherein the propagation section (46) includes a plurality of irradiation fibers configured to propagate the light beams branched by the alignment unit (44) to the irradiation unit (20), and an irradiation source including terminal ends of the respective irradiation fibers positioned at the irradiation unit (20).

3. The inspection device (14) for the rod-shaped smoking article (MF) according to claim 2, wherein the propagation section (46) includes a space propagation unit that is provided between the alignment unit (44) and the irradiation fibers and is configured to propagate the light beams by coupling through a space, and a dimming plate that is disposed in the space of the space propagation unit and is configured to dim the light beams coupled to the irradiation fibers from the alignment unit (44).

4. The inspection device (14) for the rod-shaped smoking article (MF) according to any one of claims 1 to 3, wherein the light receiver (22) is configured to receive, as the measurement beam, transmitted light beam transmitted through the rod-shaped smoking article (MF).

5. The inspection device (14) for the rod-shaped smoking article (MF) according to any one of claims 1 to 4, wherein
the adjuster (18) is configured to, when the rod-shaped smoking article (MF) is divided into a plurality of segments, adjust the color of the inspection beam to a color allowing for recognition of a boundary between the segments.

6. The inspection device (14) for the rod-shaped smoking article (MF) according to claim 5, wherein
the adjuster (18) is configured to, when the rod-shaped smoking article (MF) internally includes an object, adjust the color of the inspection beam to a color similar to a color of the object.

7. A production machine (1) for a rod-shaped smoking article (MF), the production machine including the inspection device according to any one of claims 1 to 6, the production machine comprising a conveyance drum configured to convey the rod-shaped smoking article (MF), wherein
the conveyance drum includes a cylindrical core that internally includes a suction source and the irradiation unit, and a drum shell that covers the cylindrical core and is disposed to be rotatable with respect to the cylindrical core,
the cylindrical core includes a communication port that makes the suction source and the drum shell side communicate with each other in a circumferential direction, and a first irradiation port at which the irradiation unit (20) is positioned,
the drum shell includes a plurality of holding grooves that are arranged with intervals in the circumferential direction and are each configured to hold the rod-shaped smoking article (MF), a suction hole that is opened on a bottom wall of each of the holding grooves and communicates with the communication port along with rotation of the drum shell, and a second irradiation port that is opened on the bottom wall of each of the holding grooves, and
when the second irradiation port is positioned to be overlapped with the first irradiation port along with the rotation of the drum shell, the irradiation unit (20) irradiates the rod-shaped smoking article (MF) held by the corresponding holding groove with the inspection beam.

8. The production machine for the rod-shaped smoking article (MF) according to claim 7, wherein the suction hole is the second irradiation port.

9. The production machine for the rod-shaped smoking article (MF) according to claim 7 or 8, wherein the second irradiation port is provided as a long hole having a length longer than or equal to a length of the rod-shaped article.

10. The production machine for the rod-shaped smoking article (MF) according to any one of claims 7 to 9, wherein the light sources (16), the light receiver (22), and the determination unit (24) are disposed outside the conveyance drum.

11. An inspection method for a rod-shaped smoking article (MF), comprising:
a light generation step (S1) of generating a plurality of light beams with different wavelength distributions;
an adjustment step (S2) of forming an inspection beam from the plurality of light beams;
an irradiation step (S3) of irradiating the rod-shaped smoking article (MF) with the inspection beam;
a light reception step (S4) of receiving a measurement beam obtained when the applied inspection beam acts on the rod-shaped article; and
a determination step (S5) of determining quality of the rod-shaped article based on the measurement beam, wherein
the adjustment step (S2) includes a color adjustment process of adjusting a color of the inspection beam by mixing the light beams generated in the light generation step;
wherein
the rod-shaped article is divided into a plurality of segments, and
in the color adjustment process, the color of the inspection beam is adjusted to a color allowing for recognition of a boundary between the segments;
wherein
the rod-shaped article internally includes an object, and
in the color adjustment process, the color of the inspection beam is adjusted to a color similar to a color of the object.

12. The inspection method for the rod-shaped smoking article (MF) according to claim 11, wherein, in the color adjustment process, the color of the inspection beam is adjusted by adjusting intensity of each of the light beams generated in the light generation step.

## Patentansprüche

1. Inspektionsvorrichtung (14) für einen stabförmigen Rauchartikel (MF), umfassend:
eine Vielzahl von Lichtquellen (16), die so ausgebildet sind, dass sie Lichtstrahlen mit unterschiedlichen Wellenlängenverteilungen erzeugen;
eine Einstellvorrichtung (18), die so ausgebildet ist, dass sie aus den von den jeweiligen Lichtquellen (16) erzeugten Lichtstrahlen einen Inspektionsstrahl erzeugt;
eine Bestrahlungseinheit (20), die so ausgebildet ist, dass sie den stabförmigen Rauchartikel (MF) mit dem von der Einstellvorrichtung (18) gebildeten Inspektionsstrahl bestrahlt;
einen Lichtempfänger (22), der so ausgebildet ist, dass er einen Messstrahl empfängt, der erhalten wird, wenn der von der Bestrahlungseinheit (20) aufgebrachte Inspektionsstrahl auf den stabförmigen Rauchartikel (MF) wirkt; und
eine Bestimmungseinheit (24), die so ausgebildet ist, dass sie die Qualität des stabförmigen Rauchartikels (MF) auf der Grundlage des von dem Lichtempfänger (22) empfangenen Messstrahls bestimmt, wobei
die Einstellvorrichtung (18) so ausgebildet ist, dass sie eine Farbe des Inspektionsstrahls durch Mischen der von den jeweiligen Lichtquellen (16) erzeugten Lichtstrahlen einstellt; wobei
die Einstellvorrichtung (18) so ausgebildet ist, dass sie die Farbe des Inspektionsstrahls durch Einstellen der Intensität jedes der von den jeweiligen Lichtquellen erzeugten Lichtstrahlen einstellt; wobei
die Einstellvorrichtung (18) eine Koppeleinheit (42), die so ausgebildet ist, dass sie die von den jeweiligen Lichtquellen (16) erzeugten Lichtstrahlen koppelt, eine Ausrichtungseinheit (44), die so ausgebildet ist, dass sie den von der Koppeleinheit (42) gekoppelten Lichtstrahl in eine Vielzahl von Lichtstrahlen abzweigt, und einen Ausbreitungsabschnitt (46), der so ausgebildet ist, dass er die von der Ausrichtungseinheit (44) abgezweigten Lichtstrahlen zu der Bestrahlungseinheit (20) ausbreitet, einschließt.

2. Inspektionsvorrichtung (14) für den stabförmigen Rauchartikel (MF) nach Anspruch 1, wobei der Ausbreitungsabschnitt (46) eine Vielzahl von Bestrahlungsfasern, die so ausgebildet sind, dass sie die von der Ausrichtungseinheit (44) abgezweigten Lichtstrahlen zu der Bestrahlungseinheit (20) ausbreiten, und eine Bestrahlungsquelle einschließt, die Endstücke der jeweiligen Bestrahlungsfasern einschließt, die an der Bestrahlungseinheit (20) positioniert sind.

3. Inspektionsvorrichtung (14) für den stabförmigen Rauchartikel (MF) nach Anspruch 2, wobei der Ausbreitungsabschnitt (46) eine Raumausbreitungseinheit, die zwischen der Ausrichtungseinheit (44) und den Bestrahlungsfasern bereitgestellt ist und so ausgebildet ist, dass sie die Lichtstrahlen durch Koppeln durch einen Raum ausbreitet, und eine Abblendplatte einschließt, die in dem Raum der Raumausbreitungseinheit angeordnet ist und so ausgebildet ist, dass sie die Lichtstrahlen abblendet, die von der Ausrichtungseinheit (44) an die Bestrahlungsfasern gekoppelt sind.

4. Inspektionsvorrichtung (14) für den stabförmigen Rauchartikel (MF) nach einem der Ansprüche 1 bis 3, wobei der Lichtempfänger (22) so ausgebildet ist, dass er als Messstrahl den durch den stabförmigen Rauchartikel (MF) übertragenen Lichtstrahl empfängt.

5. Inspektionsvorrichtung (14) für den stabförmigen Rauchartikel (MF) nach einem der Ansprüche 1 bis 4, wobei
die Einstellvorrichtung (18) so ausgebildet ist, dass sie, wenn der stabförmige Rauchartikel (MF) in eine Vielzahl von Segmenten unterteilt ist, die Farbe des Inspektionsstrahls auf eine Farbe einstellt, die die Erkennung einer Grenze zwischen den Segmenten ermöglicht.

6. Inspektionsvorrichtung (14) für den stabförmigen Rauchartikel (MF) nach Anspruch 5, wobei
die Einstellvorrichtung (18) so ausgebildet ist, dass sie, wenn der stabförmige Rauchartikel (MF) im Inneren ein Objekt einschließt, die Farbe des Inspektionsstrahls auf eine Farbe einstellt, die einer Farbe des Objekts ähnlich ist.

7. Produktionsmaschine (1) für einen stabförmigen Rauchartikel (MF), wobei die Produktionsmaschine die Inspektionsvorrichtung nach einem der Ansprüche 1 bis 6 einschließt, wobei die Produktionsmaschine eine Fördertrommel umfasst, die zum Fördern des stabförmigen Rauchartikels (MF) ausgebildet ist, wobei
die Fördertrommel einen zylindrischen Kern, der im Inneren eine Saugquelle und die Bestrahlungseinheit einschließt, und einen Trommelmantel einschließt, der den zylindrischen Kern bedeckt und so angeordnet ist, dass er in Bezug auf den zylindrischen Kern drehbar ist,
der zylindrische Kern eine Verbindungsöffnung, durch die die Saugquelle und die Trommelmantelseite in einer Umfangsrichtung miteinander kommunizieren, und eine erste Bestrahlungsöffnung einschließt, an der die Bestrahlungseinheit (20) positioniert ist,
der Trommelmantel eine Vielzahl von Haltenuten einschließt, die mit Abständen in der Umfangsrichtung eingerichtet sind und jeweils so ausgebildet sind, dass sie den stabförmigen Rauchartikel (MF) halten, ein Saugloch, das an einer Bodenwand jeder der Haltenuten geöffnet ist und mit der Verbindungsöffnung zusammen mit der Drehung des Trommelmantels kommuniziert, und eine zweite Bestrahlungsöffnung, die an der Bodenwand jeder der Haltenuten geöffnet ist, und
wenn die zweite Bestrahlungsöffnung so positioniert ist, dass sie mit der ersten Bestrahlungsöffnung zusammen mit der Drehung des Trommelmantels überlappt ist, die Bestrahlungseinheit (20) den stabförmigen Rauchartikel (MF), der von der entsprechenden Haltenut gehalten wird, mit dem Inspektionsstrahl bestrahlt.

8. Produktionsmaschine für den stabförmigen Rauchartikel (MF) nach Anspruch 7, wobei das Saugloch die zweite Bestrahlungsöffnung ist.

9. Produktionsmaschine für den stabförmigen Rauchartikel (MF) nach Anspruch 7 oder 8, wobei die zweite Bestrahlungsöffnung als Langloch bereitgestellt ist, das eine Länge aufweist, die größer oder gleich der Länge des stabförmigen Artikels ist.

10. Produktionsmaschine für den stabförmigen Rauchartikel (MF) nach einem der Ansprüche 7 bis 9, wobei die Lichtquellen (16), der Lichtempfänger (22) und die Bestimmungseinheit (24) außerhalb der Fördertrommel angeordnet sind.

11. Inspektionsverfahren für einen stabförmigen Rauchartikel (MF), umfassend:
einen Lichterzeugungsschritt (S1) zum Erzeugen einer Vielzahl von Lichtstrahlen mit unterschiedlichen Wellenlängenverteilungen;
einen Einstellschritt (S2) zum Bilden eines Inspektionsstrahls aus der Vielzahl von Lichtstrahlen;
einen Bestrahlungsschritt (S3) zum Bestrahlen des stabförmigen Rauchartikels (MF) mit dem Inspektionsstrahl;
einen Lichtempfangsschritt (S4) zum Empfangen eines Messstrahls, der erhalten wird, wenn der aufgebrachte Inspektionsstrahl auf den stabförmigen Artikel wirkt; und
einen Bestimmungsschritt (S5) zum Bestimmen der Qualität des stabförmigen Artikels auf der Grundlage des Messstrahls, wobei
der Einstellschritt (S2) einen Farbeinstellprozess zum Einstellen einer Farbe des Inspektionsstrahls durch Mischen der in dem Lichterzeugungsschritt erzeugten Lichtstrahlen einschließt;
wobei
der stabförmige Artikel in eine Vielzahl von Segmenten unterteilt ist und
beim Farbeinstellprozess die Farbe des Inspektionsstrahls auf eine Farbe eingestellt wird, die die Erkennung einer Grenze zwischen den Segmenten ermöglicht; wobei
der stabförmige Artikel im Inneren ein Objekt einschließt und
beim Farbeinstellprozess die Farbe des Inspektionsstrahls auf eine Farbe eingestellt wird, die einer Farbe des Objekts ähnlich ist.

12. Inspektionsverfahren für den stabförmigen Rauchartikel (MF) nach Anspruch 11, wobei beim Farbeinstellprozess die Farbe des Inspektionsstrahls durch Einstellen der Intensität jedes der in dem Lichterzeugungsschritt erzeugten Lichtstrahlen eingestellt wird.

## Revendications

1. Dispositif d'inspection (14) pour un article à fumer (MF) en forme de tige, comprenant :
une pluralité de sources de lumière (16) configurées pour générer des faisceaux lumineux avec différentes distributions de longueur d'onde ;
un élément de réglage (18) configuré pour former un faisceau d'inspection à partir des faisceaux lumineux générés par les sources de lumière (16) respectives ;
une unité d'irradiation (20) configurée pour irradier l'article à fumer (MF) en forme de tige avec le faisceau d'inspection formé par l'élément de réglage (18) ;
un récepteur de lumière (22) configuré pour recevoir un faisceau de mesure qui est obtenu lorsque le faisceau d'inspection appliqué depuis l'unité d'irradiation (20) agit sur l'article à fumer (MF) en forme de tige ; et
une unité de détermination (24) configurée pour déterminer la qualité de l'article à fumer (MF) en forme de tige sur la base du faisceau de mesure reçu par le récepteur de lumière (22), dans lequel
l'élément de réglage (18) est configuré pour régler une couleur du faisceau d'inspection en mélangeant les faisceaux lumineux générés par les sources de lumière (16) respectives ; dans lequel
l'élément de réglage (18) est configuré pour régler la couleur du faisceau d'inspection en réglant l'intensité de chacun des faisceaux lumineux générés par les sources de lumière respectives ; dans lequel
l'élément de réglage (18) inclut une unité de couplage (42) configurée pour coupler les faisceaux lumineux générés par les sources de lumière (16) respectives, une unité d'alignement (44) configurée pour bifurquer le faisceau lumineux couplé par l'unité de couplage (42) en une pluralité de faisceaux lumineux, et une section de propagation (46) configurée pour propager les faisceaux lumineux bifurqués par l'unité d'alignement (44) vers l'unité d'irradiation (20).

2. Dispositif d'inspection (14) pour l'article à fumer (MF) en forme de tige selon la revendication 1, dans lequel la section de propagation (46) inclut une pluralité de fibres d'irradiation configurées pour propager les faisceaux lumineux bifurqués par l'unité d'alignement (44) vers l'unité d'irradiation (20), et une source d'irradiation incluant des extrémités terminales des fibres d'irradiation respectives positionnées au niveau de l'unité d'irradiation (20).

3. Dispositif d'inspection (14) pour l'article à fumer (MF) en forme de tige selon la revendication 2, dans lequel la section de propagation (46) inclut une unité de propagation par espace qui est prévue entre l'unité d'alignement (44) et les fibres d'irradiation et est configurée pour propager les faisceaux lumineux par couplage à travers un espace, et une plaque de gradation qui est disposée dans l'espace de l'unité de propagation par espace et est configurée pour baisser les faisceaux lumineux couplés aux fibres d'irradiation en provenance de l'unité d'alignement (44).

4. Dispositif d'inspection (14) pour l'article à fumer (MF) en forme de tige selon l'une quelconque des revendications 1 à 3, dans lequel le récepteur de lumière (22) est configuré pour recevoir, en tant que faisceau de mesure, un faisceau lumineux transmis qui est transmis par le biais de l'article à fumer (MF) en forme de tige.

5. Dispositif d'inspection (14) pour l'article à fumer (MF) en forme de tige selon l'une quelconque des revendications 1 à 4, dans lequel
l'élément de réglage (18) est configuré pour, lorsque l'article à fumer (MF) en forme de tige est divisé en une pluralité de segments, régler la couleur du faisceau d'inspection sur une couleur permettant la reconnaissance d'une frontière entre les segments.

6. Dispositif d'inspection (14) pour l'article à fumer (MF) en forme de tige selon la revendication 5, dans lequel
l'élément de réglage (18) est configuré pour, lorsque l'article à fumer (MF) en forme de tige inclut intérieurement un objet, régler la couleur du faisceau d'inspection sur une couleur similaire à une couleur de l'objet.

7. Machine de production (1) pour un article à fumer (MF) en forme de tige, la machine de production incluant le dispositif d'inspection selon l'une quelconque des revendications 1 à 6, la machine de production comprenant un tambour d'acheminement configuré pour acheminer l'article à fumer (MF) en forme de tige, dans laquelle
le tambour d'acheminement inclut un noyau cylindrique qui inclut intérieurement une source d'aspiration et l'unité d'irradiation, et une enveloppe de tambour qui recouvre le noyau cylindrique et est disposée de façon à pouvoir tourner par rapport au noyau cylindrique,
le noyau cylindrique inclut un orifice de communication qui amènent la source d'aspiration et le côté enveloppe de tambour à communiquer l'un avec l'autre dans une direction circonférentielle, et un premier orifice d'irradiation au niveau duquel est positionnée l'unité d'irradiation (20),
l'enveloppe de tambour inclut une pluralité de rainures de maintien qui sont agencées à intervalles dans la direction circonférentielle et sont chacune configurées pour maintenir l'article à fumer (MF) en forme de tige, un trou d'aspiration qui est ouvert sur une paroi inférieure de chacune des rainures de maintien et communique avec l'orifice de communication avec une rotation de l'enveloppe de tambour, et un second orifice d'irradiation qui est ouvert sur la paroi inférieure de chacune des rainures de maintien, et
lorsque le second orifice d'irradiation est positionné de façon à être chevauché par le premier orifice d'irradiation avec la rotation de l'enveloppe de tambour, l'unité d'irradiation (20) irradie l'article à fumer (MF) en forme de tige maintenu par la rainure de maintien correspondante avec le faisceau d'inspection.

8. Machine de production pour l'article à fumer (MF) en forme de tige selon la revendication 7, dans laquelle le trou d'aspiration est le second orifice d'irradiation.

9. Machine de production pour l'article à fumer (MF) en forme de tige selon la revendication 7 ou la revendication 8, dans laquelle le second orifice d'irradiation est prévu en tant que trou long présentant une longueur supérieure ou égale à une longueur de l'article en forme de tige.

10. Machine de production pour l'article à fumer (MF) en forme de tige selon l'une quelconque des revendications 7 à 9, dans laquelle les sources de lumière (16), le récepteur de lumière (22) et l'unité de détermination (24) sont disposées à l'extérieur du tambour d'acheminement.

11. Procédé d'inspection pour un article à fumer (MF) en forme de tige, comprenant :
une étape de génération de lumière (S1) consistant à générer une pluralité de faisceaux lumineux présentant des distributions de longueur d'onde différentes ;
une étape de réglage (S2) consistant à former un faisceau d'inspection à partir de la pluralité de faisceaux lumineux ;
une étape d'irradiation (S3) consistant à irradier l'article à fumer (MF) en forme de tige avec le faisceau d'inspection ;
une étape de réception de lumière (S4) consistant à recevoir un faisceau de mesure obtenu lorsque le faisceau d'inspection appliqué agit sur l'article en forme de tige ; et
une étape de détermination (S5) consistant à déterminer la qualité de l'article en forme de tige sur la base du faisceau de mesure, dans lequel
l'étape de réglage (S2) inclut un processus de réglage de couleur consistant à régler une couleur du faisceau d'inspection en mélangeant les faisceaux lumineux générés lors de l'étape de génération de lumière ;
dans lequel
l'article en forme de tige est divisé en une pluralité de segments, et
dans le processus de réglage de couleur, la couleur du faisceau d'inspection est réglée sur une couleur permettant une reconnaissance d'une frontière entre les segments ;
dans lequel
l'article en forme de tige inclut intérieurement un objet, et
dans le processus de réglage de couleur, la couleur du faisceau d'inspection est réglée sur une couleur similaire à une couleur de l'objet.

12. Procédé d'inspection pour l'article à fumer (MF) en forme de tige selon la revendication 11, dans lequel, dans le processus de réglage de couleur, la couleur du faisceau d'inspection est réglée en réglant l'intensité de chacun des faisceaux lumineux générés lors de l'étape de génération de lumière.
